# EUROPEAN PATENT SPECIFICATION

(11) **EP 3 519 881 B1**
(45) Date of publication and mention of the grant of the patent: **17.11.2021**
(21) Application number: 17713770.0
(22) Date of filing: 08.02.2017
(51) Int. Cl.: G02C 1/08, G02C 5/22, G02C 1/00

(54) **DISMOUNTABLE FRAME FOR GLASSES**
ZERLEGBARER BRILLENRAHMEN
MONTURE DE LUNETTES DÉMONTABLE

(30) Priority: 20.06.2016 IT UB20146462 U
(43) Date of publication of application: 07.08.2019
(73) Proprietor: Padrin, Fabrizio, 36100 Vicenza (IT)
(72) Inventor: Padrin, Fabrizio, 36100 Vicenza (IT)
(86) International application number: PCT/IB2017/050668
(87) International publication number: WO 2017/221081

(56) References cited:
- CN-Y- 201 352 276
- KR-A- 20110 086 212
- KR-A- 20130 102 754
- US-A1- 2013 235 327
- US-A1- 2016 116 761

## Description

### Technical Field

The present invention finds application in the technical field of optics and has particularly for object a dismountable frame for glasses.

### State of the art

As known, the typical frame for glasses, both eyeglasses and sunglasses, comprise a shaped frontal chassis provided with two circles for housing the lenses and having a central bridge that lies on the nose.

Laterally, the chassis has two rods hinged to blocks or end pieces to be rotated between an operating position orthogonal to the chassis for resting on the user's ear to a position parallel to the chassis and adapted to allow the glasses to be stored.

The blocks or end pieces may be either of the same material of the chassis or in different materials, such as metal, resin or other polymeric materials, and typically it is integral or otherwise fixed to the chassis so as to be not removed or modified.

The hinging modes of the rods to the end pieces may vary depending on models and may require the use of screws, pins or push couplings.

On the market, it is also possible to find models wherein the rods are made as one piece and are applied directly on the chassis without a real mechanical joint.

Other solutions on the market allow the rod to be removed and replaced with other rods of the same type but with different colours.

However, even in these cases the rods are designed to be applied in the chassis which is still formed by a single body which does not allow to operate on the lenses that, instead, remain firmly placed in the chassis.

Consequently, if there is the need or in any case the desire to remove and replace lenses, or only one of them, it is necessary to carry out specific operations which are usually entrusted, in particular in the case of lenses for eyeglass, only and exclusively to a specialized optical technician.

In particular, with plastic or resin frames it is necessary to heat the chassis to force out the lenses, while in the case of metal frames it is necessary to remove the screw or pin at the hinge.

These steps still require time and a certain expertise and therefore it is risky to make them by himself because there is a risk of damage the lenses or the frame.

Furthermore, it is essential to reposition the lens properly and executes the correct centering, which represents a peculiar feature for eyeglasses.

Other solutions provide that the mounting frame has two circles for housing the lenses which are open at the bottom to remove the lenses simply by pulling downwards.

However, the lens is not adequately protected along its whole perimeter and moreover with time a deformation of the frame, even limited, may occur which does not allow the lenses to remain stable in position. Prior art includes patent applications KR20130102754, CN201352276, US2016/116761.

### Scope of the invention

The invention is defined in the claims.

The object of the present invention is to overcome the above mentioned drawbacks, by providing a dismountable frame for glasses characterized by high efficiency and relative cheapness.

A particular object is to provide a dismountable frame for glasses that allows the lenses to be removed and replaced in a quick and simple manner and without requiring particular expertise, being able to be performed even by non-expert people.

Still another object of the present invention is to provide a dismountable frame for glasses that can be customized in its various parts by the user in a simple and quick manner, also by limiting costs when the optical lenses should be replaced for a different prescription.

Still another object of the present invention is to provide a dismountable frame for glasses that always guarantees high protection and stability for the lenses applied to the frame, preserving all the compliance features needed for eyeglasses and sunglasses to not create damage or inconvenience to the user.

These objects, as well as others which will become more apparent hereinafter, are achieved by a dismountable frame for glasses that, according with claim 1, comprises a frontal chassis having a pair of circles for housing respective lenses, a pair of rods mounted laterally to said chassis, means for the removable fixing of said rods to said chassis.

The fixing means comprise a pair of end pieces each having a first shaped portion adapted to be removably inserted and fitted in a corresponding counter-shaped lateral seat of said chassis, each of said circles being provided with a through cut made in a corresponding counter-shaped lateral seat to allow the enlargement thereof in absence of said end pieces.

Thanks to this combination of features it will be possible to easily remove the end pieces to replace them with others of different shape or to replace the rods, without it being necessary to use specific tools to remove screws, pins or similar fastening members.

At the same time, once the end pieces have been removed, thanks to the presence of the through cuts it will be possible to easily remove one or both the lenses to perform maintenance or cleaning thereof or of the chassis or to replace them with lenses having the same shape but different optical properties.

In an exemplifying manner, it will be possible to replace one or both lenses with lenses having different gradation or suited for correcting other view defects, or, still, to replace an eye lens with a sun lens or vice versa.

The end piece, once placed again in its seat, will keeps firmly closed the frame preventing the lenses may come off the respective circles.

Advantageous embodiments of the invention are obtained in accordance with the dependent claims.

### Brief disclosure of the drawings

Further features and advantages of the invention will become more apparent in light of the detailed description of a preferred but not exclusive embodiment of a dismountable frame for glasses according to the invention, illustrated by way of non-limiting example with the aid of the accompanying drawing tables wherein:
**FIG. 1** is a perspective view of the frame;
**FIG. 2** is a side view of the frame of Fig. 1;
**FIG. 3** is a front view of the frame of Fig. 1;
**FIG. 4** is a rear view of the frame of Fig. 1;

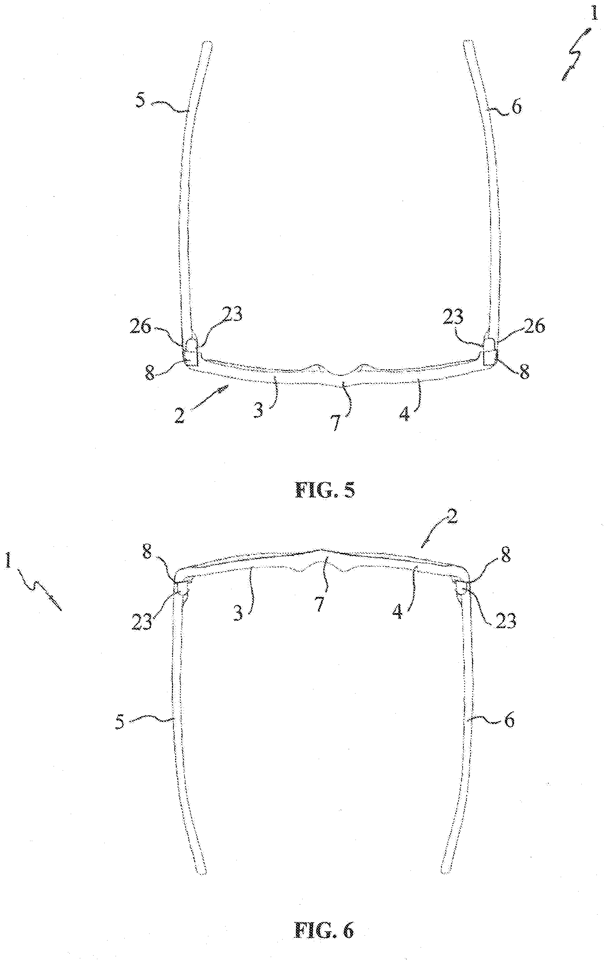

**FIG. 5** is a top view of the frame of Fig. 1;
**FIG. 6** is a bottom view of the frame of Fig. 1;
**FIG. 7** is a perspective view of the chassis of the frame of Fig. 1;
**FIG. 8** is a rear view of the chassis of Fig. 7;
**FIG. 9** is a side view of the chassis of Fig. 7;
**FIG. 10** is a first perspective view of an end piece of the frame of Fig. 1;
**FIG. 11** is a second perspective view of the end piece of Fig. 10;
**FIG. 12** is a perspective view of a side rod of the frame of Fig. 1;
**FIG. 13** is an enlarged view of a detail of the rod of Fig. 12;
**FIG. 14** is a rear view of the end piece of Fig. 10;
**FIG. 15** is a top view of the end piece of Fig. 10;
**FIG. 16** is a bottom view of the end piece of Fig. 10;
**FIG. 17** is a perspective view of a second variant of the end piece.

### Best mode of carrying out the invention

With reference to the accompanying drawings there is shown a preferred but not exclusive embodiment of a glasses frame according to the invention, globally indicated with 1, which may be both designed for eyeglasses for correcting any defect of the view and for sunglasses. Moreover, as will become more apparent hereinafter, the glasses provided with the frame according to the invention may be also converted in the use, being able to be converted from eyeglasses to sunglasses or vice versa, or to be used for the correction of various defects of the view.

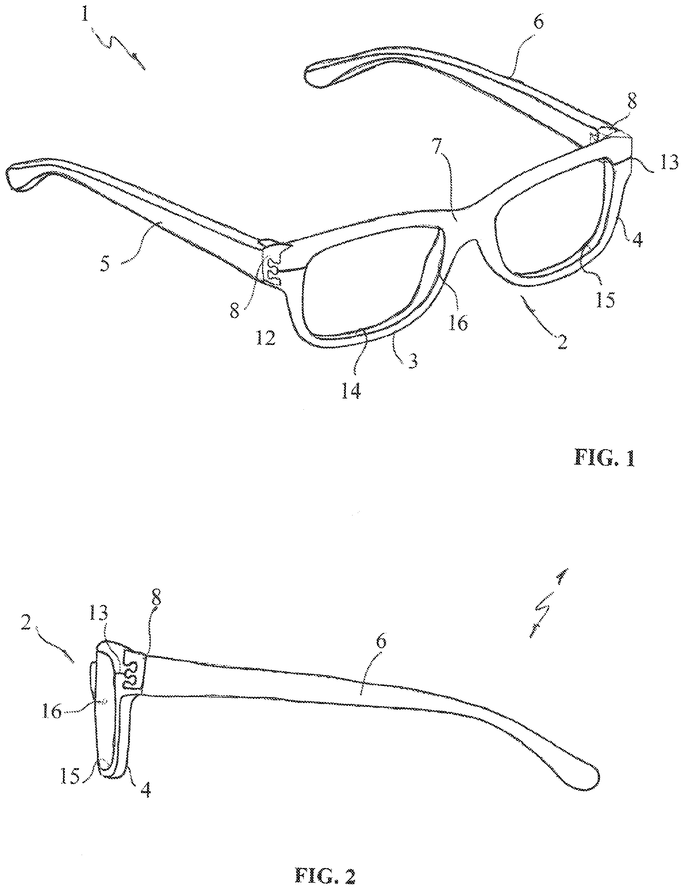

From **Fig. 1** it could be observed that, in typical fashion, the frame **1** comprises a frontal chassis **2** having a pair of circles **3**, **4** for housing respective lenses, not shown as known per sè and not belonging to the object of the invention, a pair of rods **5**, **6** mounted laterally to the chassis **2** from opposite sides of thereof and means for removably fixing the rods **5**, **6** to the chassis **2.**

In the shown embodiment, the chassis **2** is a unitary body with a pair of circles **3**, **4** closed all along their circumference to completely surround the lenses and which are mutually joined by a central bridge **7** which in use will be placed on the nose.

The materials used for the chassis **2** and for the other parts of the frame **1** are not limiting for the present invention, both metallic materials and resins or other plastic materials being adapted to be used, as well as natural materials such as wood, bone, glass or similar, composites materials and the like.

Moreover, according to variants not shown, the chassis **2** may be formed by two circles **3**, **4** distinct and joined in a separable manner from the central bridge **7**, which may take different shapes and sizes depending on the model.

The aesthetic shape of the chassis **2** and in general of the various elements that will compose the frame **1** is not limiting for the present invention, being adapted to vary depending on the needs and aesthetic taste.

According to a peculiar features of the invention, the fixing means comprise a pair of end pieces **8**, also defined blocks, arranged laterally with respect of the chassis **2** at respective rods **5**, **6** and each having a first shaped portion **9** having jointing means **10** for the removable coupling to a corresponding counter-shaped seat **11** of the chassis **2**, as more clearly visible in **Fig. 2****.**

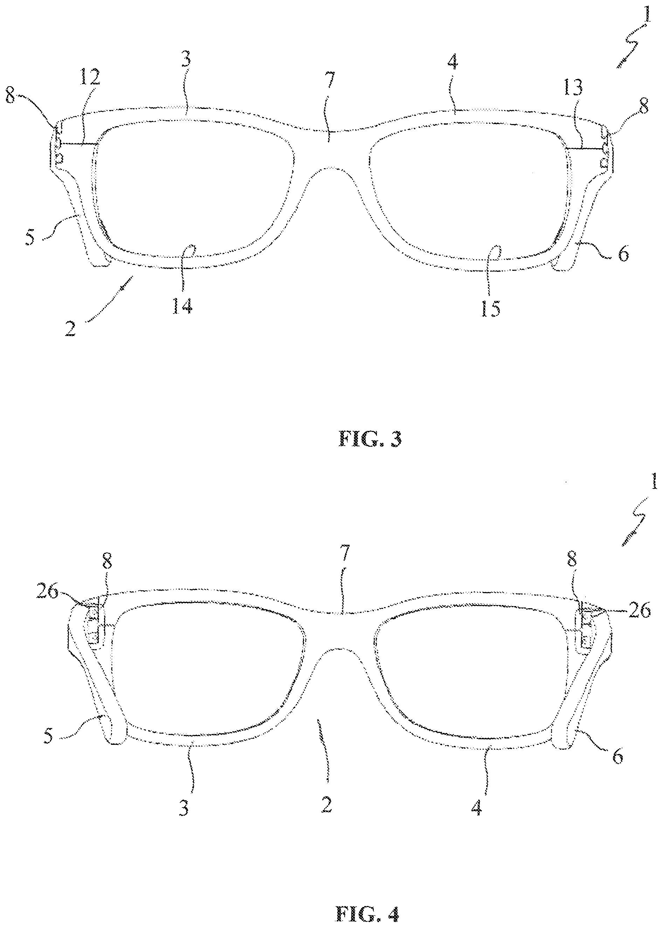

In addition, as also seen from **Figs. 3** and **4**, each of the circles **3**, **4** has, at the corresponding side seat **11**, a through cut **12**, **13** adapted to provide interruption of continuity in each of the circles **3**, **4**.

In this way, once the respective end piece **8** has been removed, it will be possible to cause the enlargement of the circles **3**, **4**, also in a separate manner from each other, with contained shifting also depending on the elasticity of the material used for the chassis **2** but sufficient to allow the unthreading of the lenses by the circles **3**, **4** and the subsequent repositioning of the lens itself or a different lens but with the same shape.

Advantageously, the circles **3**, **4** comprise a inner peripheral bevel **14**, **15** adapted to house the edge of a respective lens.

In addition, each bevel **14**, **15** has a tooth **16** radially projecting and arranged close to the bridge **7** to prevent rotation of the corresponding lens inside the bevel **14**, **15** and define a reference for the right repositioning of the lenses, making the operation quicker and easier also for unskilled persons.

In a preferred but not limiting embodiment, the teeth will have dimensions less than 0.5 mm and will be wedge shaped.

The frame **1** will allow the removal and replacement of the lenses in a quick and simple manner and without requiring particular expertise, being also adapted to be carried out by non-expert personal.

As matter of fact, although it is understood that the lenses must be prescribed, delivered and processed by qualified optical staff, who will perform the required work, whether they are sunglasses or eyeglasses, by this way the positioning of the lenses in the appropriate seats defined by the circles **3**, **4** will be even easier and safer for inexperienced people.

The rule book execution of the milling of the lenses according the prepared bevel, even if it is a simple and common processing, allow a precise centering, necessary for proper vision certified by regular compliance documentation.

In general, the stable but removable coupling between the end pieces **8** and the respective lateral seats **11** of the chassis **2** will be obtained associating to each end piece **8** jointing means **10** of the male and/or female type adapted to mate without the aid of fixing members such as screws, pins or the like, to the counter-shaped seat **11** provided with female and/or male means complementary shaped.

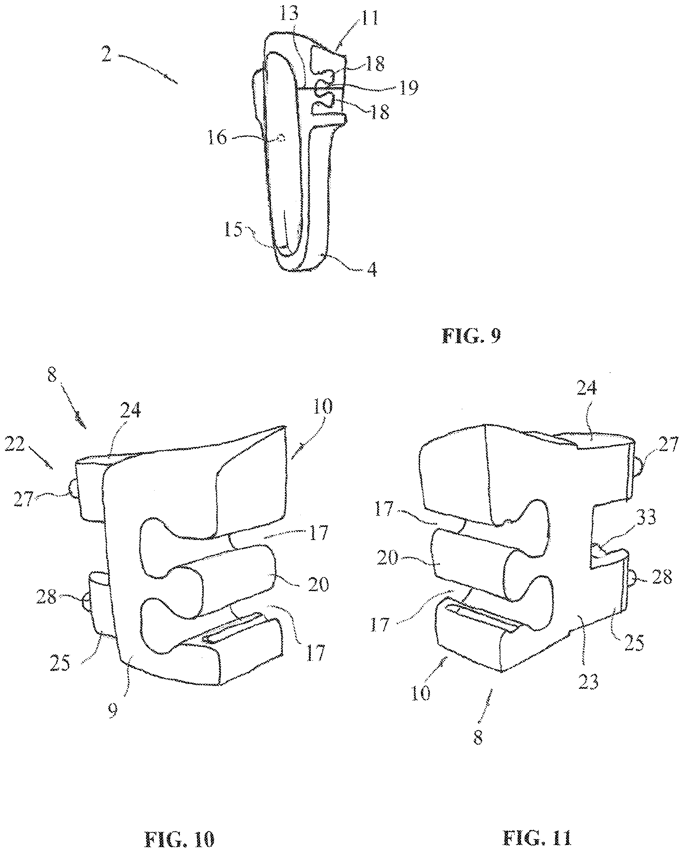

**Figs. 10** and **11** show in a greater detail a preferred but not exclusive embodiment of an end piece **8**, with the other end piece that will be substantially similar and possibly specular with respect to a symmetry plane of the chassis **2** passing through the bridge **7** and orthogonal to the chassis **2.**

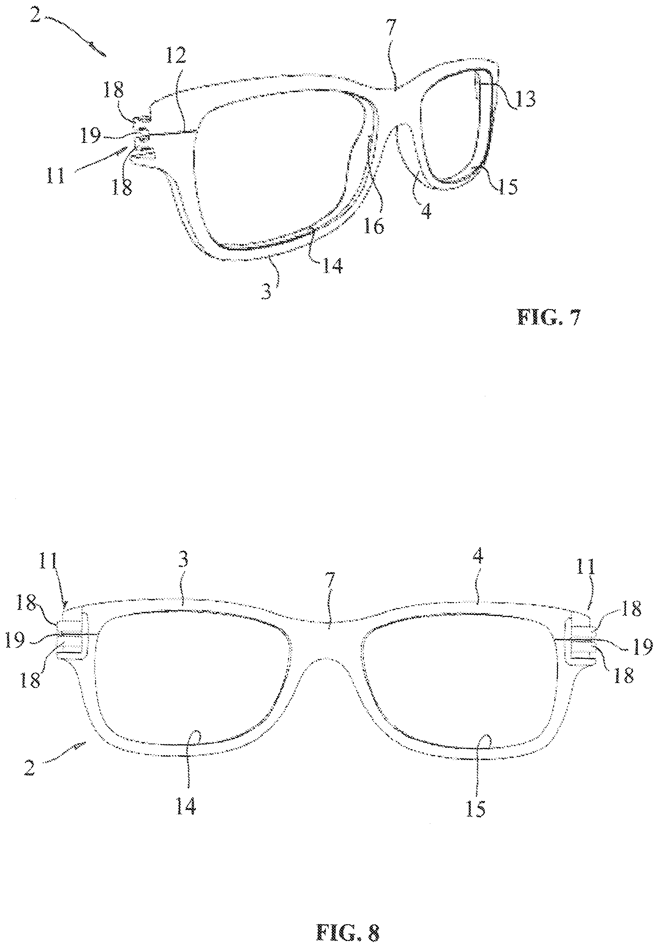

In particular, it is observed that the end piece **8** comprises a first shaped portion **9** provided with two joints **17**, for example of the dovetail type with rounded edges, adapted to be coupled and to retain corresponding counter-shaped projections **18** of the side seats **11** of the chassis **2**, more clearly visible in **FIGS. 7** to **9****.**

The coupling between the end pieces **8** and the chassis **2** may be obtained by sliding the male protrusions **19** of the lateral seats **11** inside the female joints **17** of the respective end pieces **8.** Alternatively, it will be possible to snap couple the end pieces **8** inside the respective lateral seats **11** thanks to the fact that the joints **17** of the end pieces **8** and the projections **18** of the lateral counter-shaped seats **11** have respective mutually facing edges suitably bevelled. Conveniently, the through cuts **12**, **13** will be realized between the two projections **18** of the lateral seats **11** so as to be arranged in correspondence with a central recess **19** which will be engaged by a corresponding projection **20** of complementary shape made in the nose **8** and interposed between the two joints **17.**

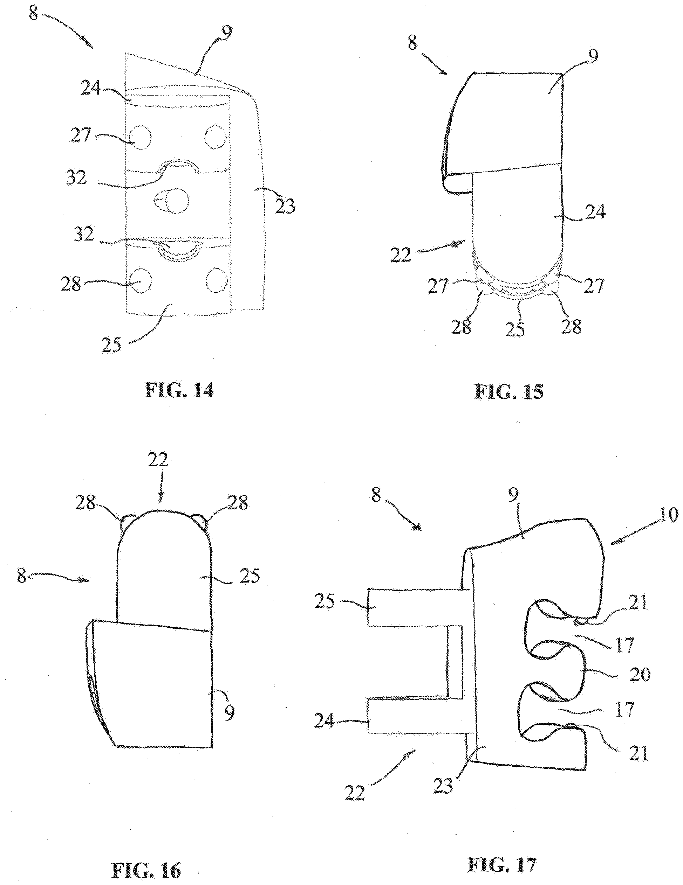

**Fig. 17** shows a variant of the end piece **8** wherein the joints **17** each include a retainer **21** adapted to be inserted in a corresponding recess, not visible, made on the respective counter-shaped protrusion **18** so as to drive the coupling and indicate the correct position assembly, also preventing the end piece **8** to move as a result of mild stresses.

According to yet another variant, not shown, the retainer **21** can be realized on the projections **18** of the lateral seats **11** while the joints **17** of the end pieces **8** will be provided with complementarily shaped recesses.

Each end piece **8** also comprises means **22** for removably anchoring a respective rod **5**, **6**, which may be designed to allow or not the rotation.

In the preferred but not exclusive shown embodiment, visible in greater detail in **Figs. 14** to **16**, the anchoring means **22** are of the hinge type and are adapted to allow the rotation of the rods **5**, **6**, preferably with maximum rotation angle at least equal to 90°.

In particular, each end piece **8** comprises a second shaped portion **23** adapted to be removably coupled to one counter shaped end of the respective rod **5**, **6**.

The second shaped portion **23** comprises a pair of flanges **24**, **25** which extend along a direction substantially orthogonal to the chassis **2.**

Similarly, the rods **5**, **6** have at one end a coupling element **26** complementarily shaped to the second shaped portion **23** of the corresponding end piece **8.**

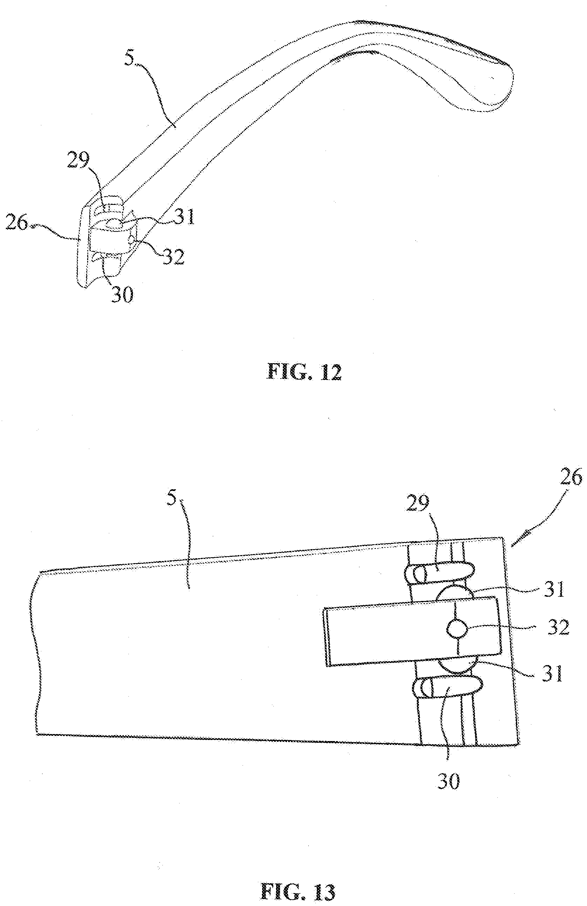

In the illustrated embodiment, exemplificative but not limiting the invention, the end pieces **8** comprise, for each flange **24**, **25**, a pair of protuberances **27**, **28** designed to engage corresponding grooves **29**, **30** provided in the rods **5**, **6**, as most clearly visible in **Figs. 12** and **13****.**

Similarly, the rods **5**, **6** further comprise protuberances **31**, **32** adapted to engage corresponding recesses **33** of the end pieces **8** to facilitate the mutual rotation and exert a minimum restraining force which prevents involuntary opening or closing movements. According to a not shown variant, the flanges **24**, **25** may be provided with respective through holes defining a transverse passage adapted to be aligned with a further transverse hole of the rod **5**, **6** for inserting a pin, a screw or similar element defining a hinge axis and having a structure known *per sè.*

The frame **1** will be dismountable and customizable in all its components, and it could be possible to vary the materials, the shape and the colours of the various elements independently from each other to have a multiplicity of possible combinations, but always ensuring, with the frame assembled, homogeneity and continuity between the elements.

The frame 1 may be manufactured according to any known technique, such as moulding, injection, milling or other typical processing.

From above it is clear that the frame according to the invention achieves the intended objects.

## Claims

1. A dismountable frame for glasses, comprising:
- a frontal chassis (**2**) having a pair of circles (**3, 4**) for housing respective lenses;
- a pair of rods (**5**, **6**) mounted laterally to said chassis (**2**) from opposite sides with respect thereto;
- means for removably fixing said rods (**5**, **6**) to said chassis (**2**);
wherein said fixing means comprise a pair of end pieces (**8**) each having a first shaped portion (**9**) with jointing means (**10**) adapted to be removably inserted and fitted in corresponding counter-shaped lateral seats (**11**) of said chassis (**2**), the latter being provided with a pair of through cuts (**12**, **13**) made in each of said lateral counter-shaped seats (**11**) to allow the enlargement of said circles (**3, 4**) in the absence of said end pieces (**8**);
wherein each of said end pieces (**8**) comprises means (**22**) for removably anchoring a respective one of said rods (**5**, **6**), said removably anchoring means (**22**) being of the hinged type and adapted to allow the rotation of said rods (**5**, **6**);
**characterized in that** said end pieces (**8**) are removably coupled with the respective lateral seats (**11**) of said chassis (**2**) and said removably anchoring means (**22**) comprise, for each of said end pieces (**8**), a second shaped portion (**23**) having a pair of flanges (**24**, **25**) adapted to be removably coupled to respective of said rods (**5**, **6**), each of said flanges (**24**, **25**) having recesses (**33**) adapted to engage corresponding protuberances (**31**, **32**) of the respective of said rods (**5, 6**) to facilitate the mutual rotation and exert a minimum restraining force which prevents involuntary opening or closing movements.

2. Frame as claimed in claim 1, **characterized in that** each of said flanges (**24**, **25**) extend along a direction substantially orthogonal to said chassis (**2**) and has one pair of protuberances (**27, 28**) designed to engage corresponding grooves (**29**, **30**) provided in the respective of said rods (**5**, **6**).

3. Frame as claimed in claim 1 or 2, **characterized in that** each rod (**5**, **6**) has at one end a coupling element (**26**) complementarily shaped with respect to the second shaped portion (**23**) of the corresponding of said end pieces (**8**) and provided with a pair of said protuberances (**31**, **32**).

4. Frame as claimed in any preceding claims, **characterized in that** said jointing means (**10**) comprise, for each of said end pieces (**8**), two or more joints (**17**) of dovetail type or the like adapted to be coupled and to retain corresponding counter-shaped projections (**18**) of said lateral seats (**11**) of said chassis (**2**).

5. Frame as claimed in claim 4, **characterized in that** each of said joints (**17**) comprises a stop (**21**) adapted to be inserted into a corresponding recess made on said complementarily shaped projections (**18**).

6. Frame as claimed in claim 5, **characterized in that** said joints (**17**) and said complementarily shaped projections (**18**) have respective mutually facing chamfered edges to facilitate the mutual snap coupling, making the operation more quick, precise and easy even for unskilled personnel.

7. Frame as claimed in any preceding claim, **characterized in that** for each of said end pieces (**8**) said second shaped portion (**23**) has a transverse passage adapted to be aligned with a transverse hole made in said end of the respective one of said rods (**5**, **6**) for inserting a pin, a screw or similar element defining a hinge axis.

8. Frame as claimed in any preceding claim, **characterized in that** each of said circles (**3**, **4**) of said chassis (**2**) comprises an inner peripheral bevel (**14**, **15**) for housing the peripheral edge of a respective lens.

9. Frame as claimed in claim 8, **characterized in that** said peripheral bevels (**14**, **15**) have each a tooth (**16**) radially projecting and adapted to prevent the rotation of the corresponding lens.

10. Frame as claimed in any preceding claim, **characterized in that** said chassis (**2**) is made as unitary body with a pair of circles (**3**, **4**) closed all along their perimeter and mutually joined by a central bridge (**7**).

## Patentansprüche

1. Zerlegbares Brillengestell, umfassend:
- ein Frontchassis (**2**) mit einem Paar Kreisen (**3**, **4**) zum Aufnehmen entsprechender Linsen;
- ein Paar Stangen (**5**, **6**), die seitlich an dem Frontchassis (**2**) von gegenüberliegenden Seiten in Bezug darauf angebracht sind;
- Befestigungsmittel zum lösbaren Befestigen der Stangen (**5**, **6**) an dem Frontchassis (**2**); wobei die Befestigungsmittel ein Paar Endstücke (**8**) umfassen, von denen jedes einen ersten geformten Abschnitt (**9**) mit Verbindungsmitteln (**10**) aufweist, die entfernbar eingesetzt und in entsprechende gegenförmige seitliche Sitze (**11**) des Frontchassis (**2**) eingepasst werden können, wobei letztere mit einem Paar von Durchgangsschnitten (**12**, **13**) versehen ist, die in jedem der seitlichen gegenläufigen Sitze (**11**) angebracht sind, um die Vergrößerung der Kreise (**3**, **4**) ohne die Endstücke (**8**);
wobei jedes der Endstücke (**8**) Verankerungsmittel (**22**) zum entfernbaren Verankern eines jeweiligen der Stangen (**5**, **6**) umfasst, wobei die entfernbaren Verankerungsmittel (**22**) gelenkig sind und die Drehung der Stangen (**5**, **6**) ermöglichen;
**dadurch gekennzeichnet, dass** die Endstücke (**8**) entfernbar mit den jeweiligen seitlichen Sitzen (**11**) des Frontchassis (**2**) verbunden sind und die entfernbaren Verankerungsmittel (**22**) für jedes der Endstücke (**8**) einen zweiten geformten Abschnitt (**23**) umfassen mit einem Paar Flansche (**24**, **25**), die entfernbar mit den jeweiligen Stangen (**5**, **6**) verbunden werden können, wobei jeder der Flansche (**24**, **25**) Aussparungen (**33**) aufweist, die geeignet sind, in entsprechende Vorsprünge (**31**, **32**) einzugreifen der jeweiligen Stangen (**5**, **6**), um die gegenseitige Drehung zu erleichtern und eine minimale Rückhaltekraft auszuüben, die ungewollte Öffnungs- oder Schließbewegungen verhindert.

2. Brillengestell nach Anspruch 1, **dadurch gekennzeichnet, dass** sich jeder der Flansche (**24**, **25**) entlang einer Richtung im Wesentlichen orthogonal zu dem Frontchassis (**2**) erstreckt und ein Paar Vorsprünge (**27**, **28**) aufweist, die dazu bestimmt sind, in entsprechende Nuten (**29**, **30**), die in den jeweiligen Stangen (**5, 6**) vorgesehen sind.

3. Brillengestell nach Anspruch 1 oder 2, **dadurch gekennzeichnet, dass** jede Stange (**5**, **6**) an einem Ende ein Kupplungselement (**26**) aufweist, das bezüglich des zweiten geformten Abschnitts (**23**) des entsprechenden der Endstücke (**8**) komplementär geformt ist und mit einem Paar der Vorsprünge (**31, 32**) versehen.

4. Brillengestell nach einem der vorhergehenden Ansprüche, **dadurch gekennzeichnet, dass** die Verbindungsmittel (**10**) für jedes der Endstücke (**8**) zwei oder mehr Gelenke (**17**) vom Schwalbenschwanztyp oder dergleichen umfassen, die koppelbar und miteinander verbunden sind Halten entsprechender gegenläufiger Vorsprünge (**18**) der seitlichen Sitze (**11**) des Fahrgestells (**2**).

5. Brillengestell nach Anspruch 4, **dadurch gekennzeichnet, dass** jedes der Gelenke (**17**) einen Anschlag (**21**) umfasst, der geeignet ist, um in eine entsprechende Aussparung eingesetzt zu werden, die an den komplementär geformten Vorsprüngen (**18**) ausgebildet ist.

6. Brillengestell nach Anspruch 5, **dadurch gekennzeichnet, dass** die Gelenke (**17**) und die komplementär geformten Vorsprünge (**18**) jeweils einander zugewandte abgeschrägte Kanten aufweisen, um die gegenseitige Schnappverbindung zu erleichtern, wodurch die Bedienung auch für ungeübte Personen schneller, präziser und einfacher wird Personal.

7. Brillengestell nach einem der vorhergehenden Ansprüche, **dadurch gekennzeichnet, dass** für jedes der Endstücke (**8**) der zweite geformte Abschnitt (**23**) einen Querdurchgang aufweist, der angepasst ist, um mit einem Querloch ausgerichtet zu werden, das in dem Ende des jeweiligen der wobei die Stangen (**5**, **6**) zum Einsetzen eines Stifts, einer Schraube oder eines ähnlichen Elements eine Scharnierachse definieren.

8. Brillengestell nach einem der vorhergehenden Ansprüche, **dadurch gekennzeichnet, dass** jeder der Kreise (**3**, **4**) des Frontchassis (**2**) eine innere Umfangsschräge (**14**, **15**) zum Aufnehmen der Umfangskante einer jeweiligen Linse umfasst.

9. Brillengestell nach Anspruch 8, **dadurch gekennzeichnet, dass** die Umfangsschrägen (**14**, **15**) jeweils einen radial vorstehenden Zahn (**16**) aufweisen, der die Drehung der entsprechenden Linse verhindert.

10. Brillengestell nach einem der vorhergehenden Ansprüche, **dadurch gekennzeichnet, dass** das Frontchassis (**2**) als einheitlicher Körper mit einem Paar von Kreisen (**3**, **4**) ausgebildet ist, die entlang ihres gesamten Umfangs geschlossen und durch eine zentrale Brücke (**7**) miteinander verbunden sind.

## Revendications

1. Monture de lunettes démontable, comprenant :
- un châssis frontal (**2**) ayant une paire de cercles (**3**, **4**) pour loger des lentilles respectives;
- une paire de tiges (**5**, **6**) montées latéralement audit châssis (**2**) depuis des côtés opposés par rapport à celui-ci ;
- des moyens pour fixer de manière amovible lesdites tiges (**5**, **6**) audit châssis (**2**);
dans lequel lesdits moyens de fixation comprennent une paire d'embouts (**8**) ayant chacun une première partie profilée (**9**) avec des moyens de jonction (**10**) adaptés pour être insérés de manière amovible et adaptés dans des sièges latéraux (**11**) en contre-forme correspondants dudit châssis (**2**), ce dernier étant pourvu d'une paire de découpes traversantes (**12**, **13**) pratiquées dans chacun desdits sièges latéraux (**11**) de contre-forme pour permettre l'agrandissement desdits cercles (**3**, **4**) en l'absence desdits embouts (**8**);
dans lequel chacune desdites embouts (**8**) comprend des moyens (**22**) pour ancrer de manière amovible l'une respective desdites tiges (**5**, **6**), lesdits moyens d'ancrage amovibles (**22**) étant du type articulé et adaptés pour permettre la rotation desdites tiges (**5**, **6**);
**caractérisé en ce que** lesdits embouts (**8**) sont couplés de manière amovible aux sièges latéraux respectifs (**11**) dudit châssis (**2**) et lesdits moyens d'ancrage amovibles (**22**) comprennent, pour chacun desdits embouts (**8**), une seconde partie profilée (**23**) ayant une paire de flasques (**24**, **25**) adaptées pour être couplées de manière amovible à chacune desdites tiges (**5**, **6),** chacune desdites flasques (**24**, **25**) ayant des évidements (**33**) adaptés pour engager des protubérances correspondantes (**31** , **32**) desdites tiges respectives (**5**, **6**) pour faciliter la rotation mutuelle et exercer une force de retenue minimale qui empêche les mouvements d'ouverture ou de fermeture involontaires.

2. Monture selon la revendication 1, **caractérisé en ce que** chacun desdits flasques (**24**, **25**) s'étend selon une direction sensiblement orthogonale audit châssis (**2**) et comporte une paire de protubérances (**27**, **28**) destinées à s'engager dans des rainures correspondantes (**29**, **30**) prévues dans lesdites tiges respectives (**5**, **6**).

3. Monture selon la revendication 1 ou 2, **caractérisé en ce que** chaque tige (**5, 6**) comporte à une extrémité un élément d'accouplement (**26**) de forme complémentaire par rapport à la seconde partie profilée (**23**) correspondante desdits embouts (**8**) et pourvu d'une paire desdites protubérances (**31**, **32**).

4. Monture selon l'une quelconque des revendications précédentes, **caractérisé en ce que** lesdits moyens de jonction (**10**) comprennent, pour chacun desdits embouts (**8**), deux ou plusieurs articulations (**17**) de type queue d'aronde ou analogue aptes à être accouplées et à retenir les saillies (18) correspondantes en contre-forme desdits sièges latéraux (**11**) dudit châssis (**2**).

5. Monture selon la revendication 4, **caractérisé en ce que** chacun desdits articulations (**17**) comprend une butée (**21**) adaptée pour être insérée dans un évidement correspondant réalisé sur lesdites saillies (**18**) de forme complémentaire.

6. Monture selon la revendication 5, **caractérisé en ce que** lesdites articulations (**17**) et lesdites saillies (18) de forme complémentaire ont des bords chanfreinés respectifs se faisant face pour faciliter l'accouplement par encliquetage mutuel, rendant l'opération plus rapide, précise et facile même pour les non qualifiés personnel.

7. Monture selon l'une quelconque des revendications précédentes, **caractérisé en ce que** pour chacun desdits embouts (**8**) ladite seconde portion profilée (**23**) présente un passage transversal apte à être aligné avec un trou transversal pratiqué dans ladite extrémité de celui respectif de lesdites tiges (**5**, **6**) pour insérer une goupille, une vis ou un élément similaire définissant un axe d'articulation.

8. Monture selon l'une quelconque des revendications précédentes, **caractérisée en ce que** chacun desdits cercles (**3**, **4**) dudit châssis (**2**) comprend un biseau périphérique interne (**14**, **15**) pour loger le bord périphérique d'une lentille respective.

9. Monture selon la revendication 8, **caractérisée en ce que** lesdits biseaux périphériques (**14**, **15**) comportent chacun une dent (**16**) en saillie radiale et adaptée pour empêcher la rotation de la lentille correspondante.

10. Monture selon l'une quelconque des revendications précédentes, **caractérisé en ce que** ledit châssis (**2**) est réalisé en caisse unitaire avec une paire de cercles (**3**, **4**) fermés tout le long de leur périmètre et reliés entre eux par un pont central (**7**).
